# EUROPEAN PATENT SPECIFICATION

(11) **EP 3 388 255 B1**
(45) Date of publication and mention of the grant of the patent: **24.06.2020**
(21) Application number: 18152439.8
(22) Date of filing: 19.01.2018
(51) Int. Cl.: B60C 11/03, B60C 11/12

(54) **PNEUMATIC TIRE**
LUFTREIFEN
PNEUMATIQUE

(30) Priority: 10.04.2017 JP 2017077630
(43) Date of publication of application: 17.10.2018
(73) Proprietor: Sumitomo Rubber Industries, Ltd., Kobe-shi Hyogo-ken (JP)
(72) Inventor: TANAKA, Kouichirou, Kobe-shi, Hyogo 651-0072 (JP)
(74) Representative: Manitz Finsterwald Patent- und Rechtsanwaltspartnerschaft mbB

(56) References cited:
- EP-A1- 2 522 531
- EP-A1- 3 290 233
- EP-A2- 2 514 608
- EP-A2- 2 586 628

## Description

### BACKGROUND OF THE INVENTION

### Field of the Invention

The present invention relates to a pneumatic tire that can effectively inhibit a hydroplaning phenomenon while maintaining steering stability on a dry road surface and performance on snow.

### Description of the Background Art

For example, Japanese Laid-Open Patent Publication No. 2016-196288 has proposed a winter tire. In the tread portion of the tire of Japanese Laid-Open Patent Publication No. 2016-196288, a plurality of slanted grooves are provided so as to extend obliquely from each tread edge toward the tire equator side, and a plurality of slanted land portions are each provided so as to be demarcated between the slanted grooves. In addition, in the tread portion of the tire, no main groove extending continuously in the tire circumferential direction is provided.

Meanwhile, recent tires have had widened treads, that is, increased tread widths, for enhancing running performance. However, when a tread pattern having no main groove as in Japanese Laid-Open Patent Publication No. 2016-196288 is applied to a tire having a large tread width, the drainage performance becomes insufficient, so that a hydroplaning phenomenon tends to easily occur on a wet road surface.
Tires comprising continuously extending main grooves are for example disclosed in EP 2 586 628 A2, EP 2 522 531 A2 or EP 2 514 608 A2.

### SUMMARY OF THE INVENTION

The present invention has been made in view of the above-described problem, and a main object of the present invention is to provide a pneumatic tire that can inhibit a hydroplaning phenomenon while maintaining steering stability on a dry road surface and performance on snow.

The present invention is directed to a pneumatic tire having a tread portion, wherein: in the tread portion, a main groove is provided so as to extend continuously in a tire circumferential direction between a tire equator and a first tread edge at one side in a tire axial direction, a plurality of slanted grooves are each provided so as to extend obliquely from the first tread edge toward the tire equator side and terminate at a position at the tire equator side beyond the main groove, and a plurality of slanted land portions are each provided so as to be demarcated between the slanted grooves adjacent to each other in the tire circumferential direction; and in at least one of the slanted land portions, a lug groove that is connected at one end thereof to the slanted groove at a forward side in a rotation direction and that terminates at another end thereof within the slanted land portion is provided so as to be adjacent to the main groove, wherein each main groove of the present embodiment is configured such that a plurality of groove portions each connecting the slanted grooves adjacent to each other in the tire circumferential direction are aligned in the tire circumferential direction, whereby the adjacent groove portions are continuous, and wherein the main groove has a smaller groove depth in the groove portion than the slanted groove.

In the pneumatic tire according to the present invention, the lug groove is preferably provided at the first tread edge side of the main groove.

In the pneumatic tire according to the present invention, the lug groove is preferably slanted in a direction away from the main groove while extending from the one end toward the other end thereof.

In the pneumatic tire according to the present invention, the slanted groove preferably has a larger groove width than the main groove.

In the pneumatic tire according to the present invention, a distance in the tire axial direction from the tire equator to a groove center line of the main groove is preferably 0.10 to 0.20 times of a tread width.

In the pneumatic tire according to the present invention, a ratio W1/L1 of a maximum ground-contact width W1 in the tire axial direction relative to a ground-contact length L1 in the tire circumferential direction on the tire equator C in a ground-contact surface of the tread portion when the pneumatic tire is mounted on a normal rim with a normal internal pressure and a normal load is applied to the pneumatic tire such that the tread portion is brought into contact with a plane at a camber angle of 0°, is preferably 1.10 to 1.80.

In the pneumatic tire according to the present invention, the maximum ground-contact width W1 is preferably 200 to 250 mm.
In the pneumatic tire according to the present invention, central axial grooves are preferably provided in the tread portion, wherein each central axial groove branches from the slanted groove and extends in the tire axial direction so as to traverse the tire equator.
In the pneumatic tire according to the present invention, a connection groove is preferably further provided in each slanted land portion, so as to connect between the slanted grooves adjacent to each other in the tire circumferential direction

In the tread portion of the pneumatic tire according to the present invention, the main groove is provided so as to extend continuously in the tire circumferential direction between the tire equator and the first tread edge at the one side in the tire axial direction, the plurality of slanted grooves are each provided so as to extend obliquely from the first tread edge toward the tire equator side and terminate at a position at the tire equator side beyond the main groove, and the plurality of slanted land portions are each provided so as to be demarcated between the slanted grooves adjacent to each other in the tire circumferential direction.

The main groove achieves excellent drainage performance and thus effectively inhibits a hydroplaning phenomenon. In addition, during running on snow, each slanted groove forms a long snow column extending obliquely relative to the tire axial direction and shears the snow column, whereby great on-snow traction can be obtained.

In at least one of the slanted land portions, the lug groove that is connected at one end thereof to the slanted groove and that terminates at another end thereof within the slanted land portion is provided so as to be adjacent to the main groove. Such a lug groove can enhance wet performance and performance on snow while maintaining steering stability on a dry road surface by inhibiting a decrease in the stiffness of the slanted land portion. In addition, the lug groove adjacent to the main groove allows the slanted land portion to moderately deform, thereby inhibiting clogging of the main groove and the slanted groove with snow during running on snow, whereby excellent performance on snow can be continuously exerted.

As described above, the pneumatic tire according to the present invention can inhibit a hydroplaning phenomenon while maintaining steering stability on a dry road surface and performance on snow.

### BRIEF DESCRIPTION OF THE DRAWINGS

FIG. 1 is a development of a tread portion of a pneumatic tire according to an embodiment of the present invention;
FIG. 2 is an enlarged view of a first tread portion in FIG. 1;
FIG. 3 is an enlarged view of a slanted land portion in FIG. 2;
FIG. 4(a) is an enlarged view of a crown block in FIG. 3;
FIG. 4(b) is an enlarged view of a middle block in FIG. 3;
FIG. 4(c) is an enlarged view of a shoulder block in FIG. 3;
FIG. 5 is a plan view of a ground-contact surface of the tread portion;
FIG. 6 is a development of a tread portion of a pneumatic tire according to another embodiment of the present invention;
FIG. 7 is a development of a tread portion of a pneumatic tire according to still another embodiment of the present invention; and
FIG. 8 is a development of a tread portion of a pneumatic tire of a comparative example.

### DESCRIPTION OF THE PREFERRED EMBODIMENTS

Hereinafter, an embodiment of the present invention will be described with reference to the drawings.

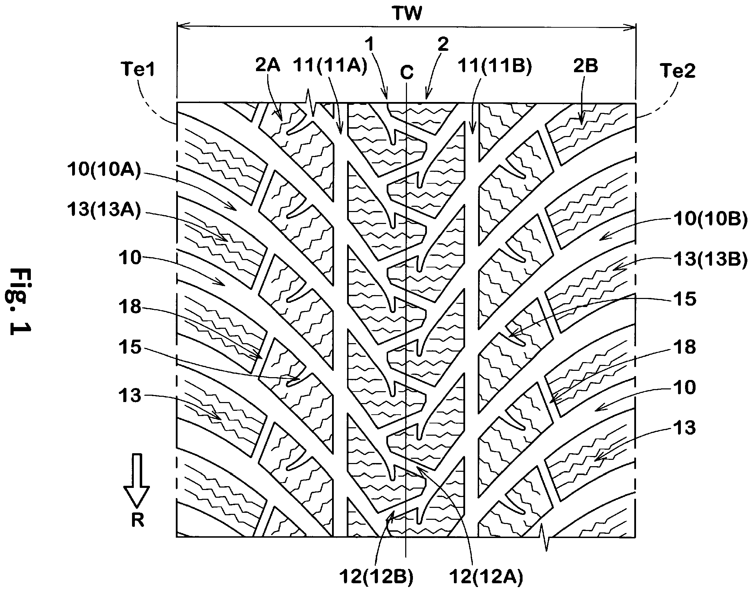

FIG. 1 is a development of a tread portion 2 of a pneumatic tire (hereinafter, referred to merely as "tire") 1 according to the present embodiment. As shown in FIG. 1, the tire 1 according to the present embodiment is suitably used, for example, as a winter pneumatic tire for a passenger car. In another embodiment of the present invention, the tire 1 can be used, for example, as a heavy duty pneumatic tire.

The tire 1 according to the present embodiment has a directional pattern for which a rotation direction R is designated. The rotation direction R is shown, for example, on each side wall (not shown) by a character or a symbol.

The tire 1 according to the present embodiment has the tread portion 2 between a first tread edge Te1 and a second tread edge Te2. The tread portion 2 includes a first tread portion 2A between a tire equator C and the first tread edge Te1, and a second tread portion 2B between the tire equator C and the second tread edge Te2.

In the case of a pneumatic tire, each of the first tread edge Te1 and the second tread edge Te2 is a ground contact position at the outermost side in the tire axial direction when a normal load is applied to the tire 1 in a normal state and the tire 1 is brought into contact with a plane at a camber angle of 0°. The normal state is a state where the tire is mounted to a normal rim and inflated to a normal internal pressure and no load is applied to the tire. In the present specification, unless otherwise specified, dimensions of components of the tire and the like are values measured in the normal state.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

In the tread portion 2, a main groove 11 is provided in each of the tread portions 2A and 2B so as to extend continuously in the tire circumferential direction, and a plurality of slanted grooves 10 are provided. The main groove 11 achieves excellent drainage performance and thus can effectively inhibit a hydroplaning phenomenon.

The slanted grooves 10 include, for example, first slanted grooves 10A provided in the first tread portion 2A, and second slanted grooves 10B provided in the second tread portion 2B. The first slanted grooves 10A extend obliquely from the first tread edge Te1 toward the tire equator C side. The second slanted grooves 10B extend obliquely from the second tread edge Te2 toward the tire equator C side. The second slanted grooves 10B have substantially the same configuration as the first slanted grooves 10A. Thus, unless mentioned otherwise, the configurations of the first slanted grooves 10A can be applied to the second slanted grooves 10B. During running on snow, each slanted groove 10 forms a long snow column extending obliquely relative to the tire axial direction and shears the snow column, whereby great on-snow traction can be obtained.

In a preferable mode, each of the slanted grooves 10A and 10B is slanted toward the forward side in the rotation direction R while extending from the tread edge Te1 or Te2 toward the tire equator C side. However, the present invention is not limited to such a mode.

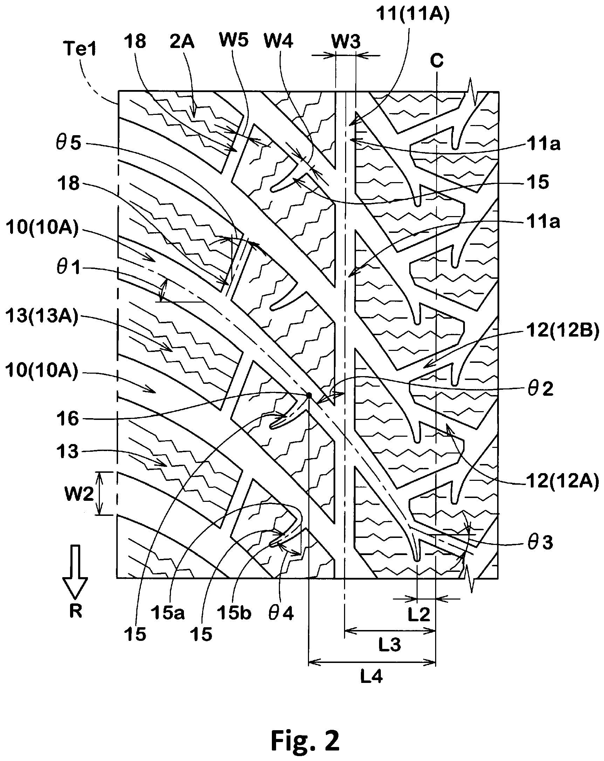

FIG. 2 shows an enlarged view of the first tread portion 2A. As shown in FIG. 2, for example, each slanted groove 10 is preferably curved such that an angle θ1 of the slanted groove 10 relative to the tire axial direction gradually increases toward the tire equator C side. The angle θ1 is preferably, for example, 25 to 80°. Such a slanted groove 10 can exert great snow column shearing force also in the tire axial direction during running on snow.

The slanted groove 10 terminates at a position at the tire equator C side beyond the main groove 11. For example, the slanted groove 10 terminates without traversing the tire equator C. A distance L2 in the tire axial direction from an inner end (which means the inner end, in the tire axial direction, of a groove center line, the same applies to the following) of the slanted groove 10 to the tire equator C is preferably, for example, 2.0% to 5.0% of a tread width TW (shown in FIG. 1, the same applies to the following). The tread width TW is the distance in the tire axial direction from the first tread edge Te1 to the second tread edge Te2 in the normal state.

The slanted groove 10 preferably has, for example, a groove width that gradually increases toward the first tread edge Te1 side. At least a portion of the slanted groove 10 preferably has, for example, a larger groove width than the main groove 11. A maximum groove width W2 of the slanted groove 10 is preferably, for example, 5.0% to 9.0% of the tread width TW. In the case of a winter tire for a passenger car, the depth of the slanted groove 10 is preferably, for example, 7.0 to 11.0 mm.

As shown in FIG. 1, the main grooves 11 include, for example, a first main groove 11A provided in the first tread portion 2A, and a second main groove 11B provided in the second tread portion 2B. In the present embodiment, one main groove 11 is provided in each of the tread portions 2A and 2B. The second main groove 11B has substantially the same configuration as the first main groove 11A. Thus, unless mentioned otherwise, the configuration of the first main groove 11A can be applied to the second main groove 11B.

As shown in FIG. 2, each main groove 11 of the present embodiment is configured such that a plurality of groove portions 11a each connecting the slanted grooves 10 adjacent to each other in the tire circumferential direction are aligned in the tire circumferential direction, whereby the adjacent groove portions 11a are continuous. More specifically, each groove portion 11a is at least connected to the groove portion 11a adjacent thereto in the tire circumferential direction when being virtually extended in the tire circumferential direction. In a preferable mode, when each groove portion 11a is virtually extended, the groove portion 11a overlaps the groove portion 11a adjacent thereto in the tire circumferential direction, and such an overlap is over half or more of the groove width thereof. As a more preferable mode, in the present embodiment, the groove edges, at each side, of the respective groove portions 11a are provided on the same straight line. Accordingly, each main groove 11 of the present embodiment extends so as to be continuous in a straight manner along the tire circumferential direction.

A distance L3 in the tire axial direction from the tire equator C to the groove center line of the main groove 11 is preferably 0.10 to 0.20 times of the tread width TW. Such a main groove 11 can effectively enhance the drainage performance near the tire equator C.

An intersection angle θ2 between the groove center line of the main groove 11 and the groove center line of the slanted groove 10 is preferably not less than 30° and more preferably not less than 35°, and is preferably not greater than 50° and more preferably not greater than 45°. When the slanted groove 10 is slanted in the above-described direction, and the intersection angle θ2 falls within the above range, part of water within the main groove 11 is easily drained through the slanted groove 10 to the outer side in the tire axial direction during wet running. Thus, even with the main groove 11 having a relatively small groove width and groove depth, desired drainage performance is achieved. Therefore, the steering stability on a dry road surface and the wet performance can be enhanced in a balanced manner.

In order to enhance the steering stability on a dry road surface and the wet performance in a balanced manner, the main groove 11 preferably has, for example, a groove width W3 that is 2.5% to 3.5% of the tread width TW. According to the present invention the main groove 11 has a smaller groove depth in the groove portion 11a than the slanted groove 10. In the case of a winter tire for a passenger car, the groove depth is preferably, for example, 5.0 to 10.0 mm.

In the tread portion 2 of the present embodiment, for example, central axial grooves 12 are preferably provided. For example, each central axial groove 12 branches from the slanted groove 10 and extends in the tire axial direction so as to traverse the tire equator C. More specifically, the central axial grooves 12 include first central axial grooves 12A and second central axial grooves 12B. The first central axial grooves 12A are slanted in the same direction as the first slanted grooves 10A. Each first central axial groove 12A branches from the first slanted groove 10A, extends in the tire axial direction, and is connected to the second slanted groove 10B. The second central axial grooves 12B are slanted in the same direction as the second slanted grooves 10B. Each second central axial groove 12B branches from the second slanted groove 10B, extends in the tire axial direction, and is connected to the first slanted groove 10A. The first central axial grooves 12A and the second central axial grooves 12B are alternately provided in the tire circumferential direction.

Each central axial groove 12 is preferably provided, for example, at an angle θ3 of 15 to 30°relative to the tire axial direction.

In the tread portion 2, slanted land portions 13 are provided. Each slanted land portion 13 is demarcated between the slanted grooves 10 adjacent to each other in the tire circumferential direction. Each slanted land portion 13 of the present embodiment includes, for example, a region demarcated between the first central axial groove 12A and the second central axial groove 12B.

As shown in FIG. 1, the slanted land portions 13 include, for example, first slanted land portions 13A demarcated between a plurality of the first slanted grooves 10A, and second slanted land portions 13B demarcated between a plurality of the second slanted grooves 10B.

The second slanted land portions 13B have substantially the same configuration as the first slanted land portions 13A. Thus, unless mentioned otherwise, the configurations of the first slanted land portions 13A can be applied to the second slanted land portions 13B.

As shown in FIG. 2, a lug groove 15 is provided in at least one of the slanted land portions 13 so as to be adjacent to the main groove 11. The lug groove 15 is connected at one end 15a thereof to the slanted groove 10 and terminates at another end 15b thereof within the slanted land portion 13. Such a lug groove 15 can enhance the wet performance and the performance on snow while maintaining the steering stability on a dry road surface by inhibiting a decrease in the stiffness of the slanted land portion 13. In addition, the lug groove 15 adjacent to the main groove 11 allows the slanted land portion 13 to moderately deform, thereby inhibiting clogging of the main groove 11 and the slanted groove 10 with snow during running on snow, whereby excellent performance on snow can be continuously exerted.

The lug groove 15 of the present embodiment is preferably provided at the first tread edge Te1 side of the main groove 11. In addition, the lug groove 15 is connected to the slanted groove 10 at the forward side in the rotation direction R.

The lug groove 15 is preferably slanted in a direction away from the main groove 11 while extending from the one end 15a to the other end 15b. For example, the lug groove 15 of the present embodiment is slanted at an angle θ4 of 45 to 65°relative to the tire circumferential direction. Such a lug groove 15 serves to deform the slanted land portion 13 in the tire axial direction and in the tire circumferential direction and can further inhibit clogging with snow.

At the one end 15a side of the lug groove 15, the point of intersection between an extension of the groove center line of the lug groove 15 and the groove center line of the slanted groove 10 is defined as a first point of intersection 16. A distance L4 in the tire axial direction from the tire equator C to the first point of intersection 16 is preferably, for example, 1.30 to 1.50 times of the distance L3 in the tire axial direction from the tire equator C to the groove center line of the main groove 11. Such a lug groove 15 can inhibit clogging of the main groove 11 with snow during running on snow while appropriately maintaining the stiffness of the slanted land portion 13.

The lug groove 15 preferably has, for example, a groove width W4 smaller than the groove width W3 of the main groove 11. The groove width W4 of the lug groove 15 is preferably, for example, 0.50 to 0.70 times of the groove width W3 of the main groove 11. Such a lug groove 15 can enhance the steering stability on a dry road surface and the performance on snow in a balanced manner.

For example, the lug groove 15 has a smaller depth than the slanted groove 10. In a more preferable mode, the lug groove 15 has a smaller depth than the main groove 11. Accordingly, the stiffness of the slanted land portion 13 is enhanced, and thus the steering stability on a dry road surface is enhanced.

In each slanted land portion 13, a connection groove 18 is preferably further provided so as to connect between the slanted grooves 10 adjacent to each other in the tire circumferential direction. The connection groove 18 of the present embodiment is provided, for example, between the lug groove 15 and the first tread edge Te1.

The connection groove 18 is preferably slanted, for example, relative to the tire circumferential direction in the same direction as the lug groove 15. The connection groove 18 of the present embodiment is slanted, for example, at a smaller angle θ5 relative to the tire circumferential direction than the lug groove 15. The angle θ5 of the connection groove 18 is preferably, for example, 15 to 30°. Such a connection groove 18, together with the lug groove 15, further promotes deformation of the slanted land portion 13 and thus can further inhibit clogging of the slanted groove 10 and the main groove 11 with snow.

The connection groove 18 preferably has, for example, a smaller depth than the slanted groove 10. In a more preferable mode, the connection groove 18 has a smaller depth than the main groove 11. Accordingly, the stiffness of the slanted land portion 13 is enhanced, and thus the steering stability on a dry road surface is enhanced.

In order to enhance the steering stability on a dry road surface and the wet performance in a balanced manner, the connection groove 18 preferably has, for example, a smaller groove width W5 than the main groove 11. The groove width W5 of the connection groove 18 is preferably, for example, 0.50 to 0.70 times of the groove width W3 of the main groove 11.

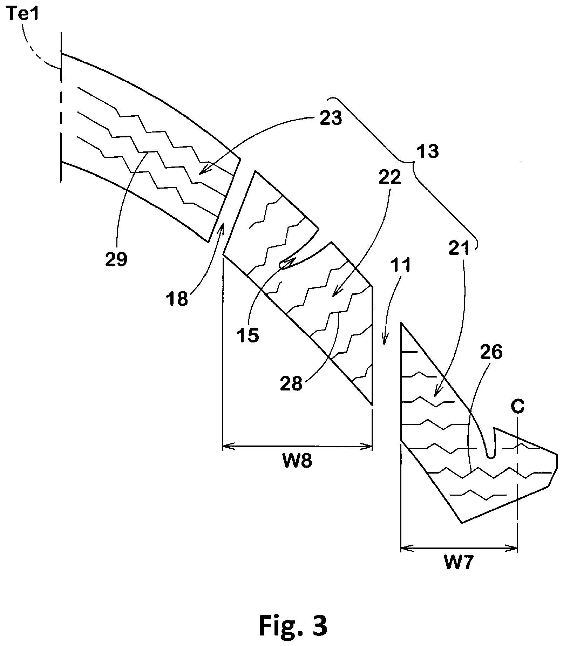

FIG. 3 shows an enlarged view of the slanted land portion 13. As shown in FIG. 3, for example, , the slanted land portion 13 is demarcated by the above-described grooves so as to include a crown block 21, a middle block 22, and a shoulder block 23.

For example, the crown block 21 is demarcated at the inner side, in the tire axial direction, of the main groove 11. The crown block 21 includes, for example, a region demarcated between the slanted grooves 10 adjacent to each other in the tire circumferential direction, and a region demarcated between the first central axial groove 12A and the second central axial groove 12B.

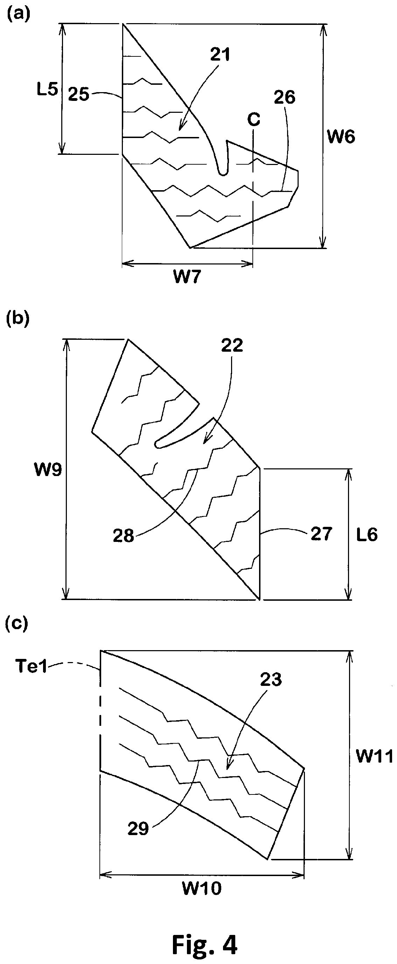

FIG. 4(a) shows an enlarged view of the crown block 21. As shown in FIG. 4(a), the crown block 21 preferably has, for example, a crown circumferential edge 25 extending along the tire circumferential direction. A length L5 in the tire circumferential direction of the crown circumferential edge 25 is preferably, for example, 0.50 to 0.70 times of a maximum width W6, in the tire circumferential direction, of the crown block 21. Such a crown block 21 causes the crown circumferential edge 25 to exert frictional force in the tire axial direction with moderate deformation thereof. Therefore, for example, the crown block 21 can exert frictional force in the tire axial direction, during running on a packed-snow road surface obtained by snow being packed, while inhibiting clogging of the main groove 11 with snow.

A body width W7 of the crown block 21 from the tire equator C to the crown circumferential edge 25 is preferably, for example, 0.10 to 0.20 times of the tread width TW. Accordingly, a sufficient rubber volume is ensured between the crown circumferential edge 25 and the tire equator C. In addition, the crown circumferential edge 25 is relatively close to the tire equator C, and a large contact pressure acts on the crown circumferential edge 25. Thus, for example, the crown circumferential edge 25 can provide large frictional force on a packed-snow road surface.

In the crown block 21, for example, a plurality of crown sipes 26 are preferably provided. Each crown sipe 26 of the present embodiment extends, for example, in a zigzagging manner in the tire axial direction. Such a crown sipe 26 allows the crown block 21 to moderately deform during running on snow and thus can further inhibit clogging of the slanted groove 10 and the main groove 11 with snow. In the present specification, the "sipe" means a slit having a width less than 2.0 mm.

As shown in FIG. 3, for example, the middle block 22 is demarcated between the main groove 11 and the connection groove 18. In the middle block 22, the above-described lug groove 15 is provided. A maximum width W8, in the tire axial direction, of the middle block 22 is preferably, for example, 1.20 to 1.40 times of the body width W7 of the crown block 21.

FIG. 4(b) shows an enlarged view of the middle block 22. As shown in FIG. 4(b), the middle block 22 preferably has, for example, a middle circumferential edge 27 extending along the tire circumferential direction. A length L6, in the tire circumferential direction, of the middle circumferential edge 27 is preferably, for example, 0.55 to 0.70 times of a maximum width W9, in the tire circumferential direction, of the middle block 22. Such a middle block 22 causes the middle circumferential edge 27 to exert frictional force in the tire axial direction with moderate deformation thereof. Therefore, for example, the middle block 22 can exert frictional force in the tire axial direction, during running on a packed-snow road surface, while inhibiting clogging of the slanted groove 10 and the main groove 11 with snow.

In the middle block 22, for example, a plurality of middle sipes 28 are preferably provided. For example, each middle sipe 28 is preferably slanted relative to the tire circumferential direction in the same direction as the lug groove 15 and extends in a zigzagging manner. Such a middle sipe 28, together with the lug groove 15, promotes deformation of the middle block 22 and thus can further inhibit clogging of the slanted groove 10 and the main groove 11 with snow.

As shown in FIG. 3, for example, the shoulder block 23 is demarcated between the connection groove 18 and the first tread edge Te1.

FIG. 4(c) shows an enlarged view of the shoulder block 23. As shown in FIG. 4(c), a maximum width W10, in the tire axial direction, of the shoulder block 23 is preferably, for example, 1.45 to 1.65 times of the body width W7 of the crown block 21.

In a preferable mode, a ratio W10/W11 of the maximum width W10, in the tire axial direction, to a maximum width W11, in the tire circumferential direction, of the shoulder block 23 is, for example, 0.90 to 1.10. Such a shoulder block 23 maintains the stiffness in the tire circumferential direction and in the tire axial direction in a balanced manner and thus can enhance the steering stability on a dry road surface.

In the shoulder block 23, for example, a plurality of shoulder sipes 29 are preferably provided. For example, each shoulder sipe 29 is preferably slanted relative to the tire circumferential direction in a direction opposite to that of the connection groove 18 and extends in a zigzagging manner.

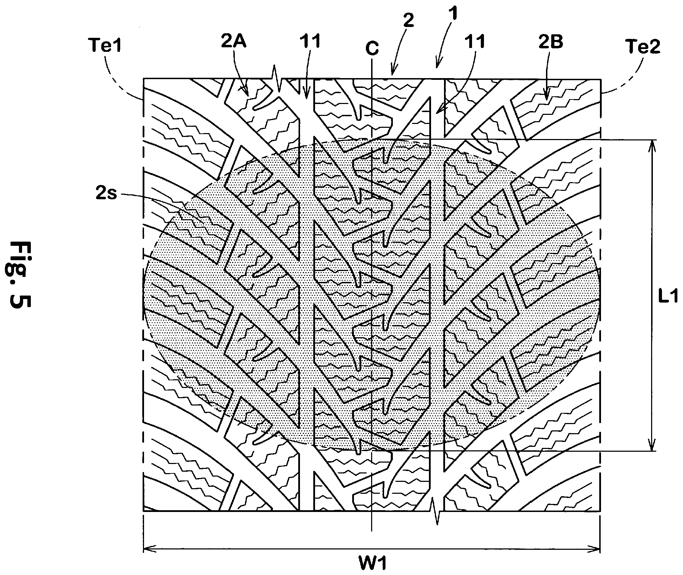

FIG. 5 shows a plan view illustrating a ground-contact surface 2s of the tread portion 2. In FIG. 5, the ground-contact surface 2s is colored. The ground-contact surface 2s in FIG. 5 is a ground-contact surface when the tire 1 is mounted on a normal rim with the normal internal pressure and the normal load is applied to the tire 1 such that the tread portion 2 is brought into contact with a plane at a camber angle of 0°. As shown in FIG. 5, in the ground-contact surface 2s, a ratio W1/L1 of a maximum ground-contact width W1 in the tire axial direction to a ground-contact length L1 in the tire circumferential direction on the tire equator C is preferably not less than 1.10 and more preferably not less than 1.35 and is preferably not greater than 1.80 and more preferably not greater than 1.65. More specifically, the maximum ground-contact width W1 is preferably, for example, 200 to 250 mm. The present invention can inhibit a hydroplaning phenomenon, in such a tire having a relatively large ground-contact width W1, while maintaining the steering stability on a dry road surface and the performance on snow.

As shown in FIG. 1, a land ratio Lr of the tread portion 2 of the present embodiment is preferably not less than 60% and more preferably not less than 65% and is preferably not greater than 80% and more preferably not greater than 75%. Accordingly, the steering stability on a dry road surface and the performance on snow are enhanced in a balanced manner. In the present specification, the "land ratio" is a ratio Sb/Sa of an actual total contact area Sb to a whole area Sa of a virtual ground-contact surface obtained by filling each groove and each sipe.

From the same viewpoint, a rubber hardness Ht of a tread rubber forming the tread portion 2 is preferably not less than 45° and more preferably not less than 55° and is preferably not greater than 70° and more preferably not greater than 65°. In the present specification, the "rubber hardness" is a hardness measured with a type A durometer in the environment at 23°C according to JIS-K6253.

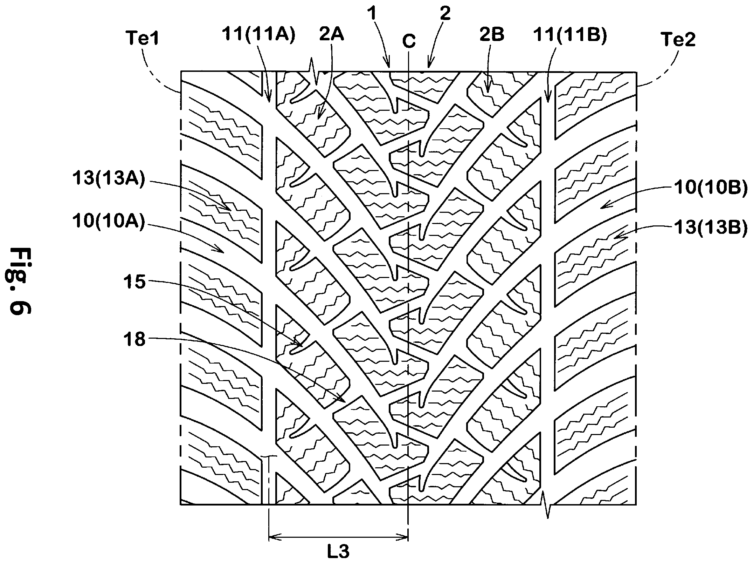

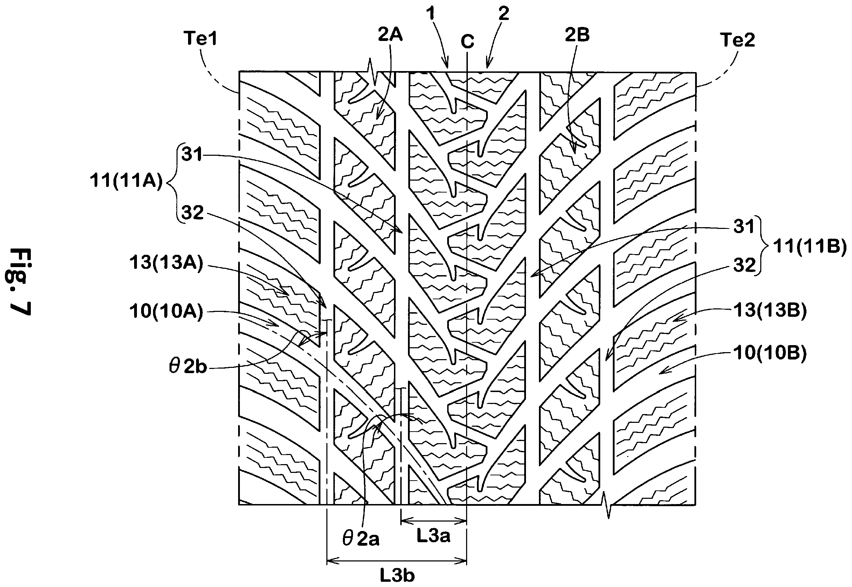

FIGS. 6 and 7 each show a development of a tread portion 2 of a pneumatic tire 1 according to another embodiment of the present invention. In FIGS. 6 and 7, the elements common to the above embodiment are designated by the same reference characters, and the description thereof is omitted here.

In the embodiment shown in FIG. 6, main grooves 11 are provided outward of those of the above-described embodiment in the tire axial direction. In this embodiment, the distance L3 in the tire axial direction from the tire equator C to each main groove 11 is 0.25 to 0.35 times of the tread width TW. Such a main groove 11 enhances the stiffness near the tire equator C and thus can achieve excellent steering stability on a dry road surface, as compared to that of the embodiment shown in FIG. 1.

In this embodiment, the above-described lug grooves 15 are provided between each main groove 11 and the tire equator C. In addition, the above-described connection grooves 18 are provided between each lug groove 15 and the tire equator C. Accordingly, a decrease in drainage performance due to the increase in the distance L3 is prevented, and thus a hydroplaning phenomenon can be inhibited.

In the embodiment shown in FIG. 7, a plurality of main grooves 11 are provided between the tire equator C and the first tread edge Te1. In the tread portion 2 of this embodiment, for example, an inner main groove 31 is provided closest to the tire equator C, and an outer main groove 32 is provided between the inner main groove 31 and the first tread edge Te1. In such an embodiment, further excellent drainage performance can be achieved.

A distance L3a in the tire axial direction from the tire equator C to the groove center line of the inner main groove 31 is preferably, for example, 0.10 to 0.20 times of the tread width TW. A distance L3b in the tire axial direction from the tire equator C to the groove center line of the outer main groove 32 is preferably, for example, 0.25 to 0.35 times of the tread width TW.

An intersection angle θ2a between the groove center line of the inner main groove 31 and the groove center line of each slanted groove 10 is preferably, for example, 35 to 45°.

An intersection angle θ2b between the groove center line of the outer main groove 32 and the groove center line of each slanted groove 10 is preferably, for example, 40 to 50°. Accordingly, the respective main grooves 31 and 32 and the slanted grooves 10 can cooperate to inhibit a hydroplaning phenomenon.

In this embodiment, lug grooves 15 are provided between the inner main groove 31 and the outer main groove 32 so as to be adjacent thereto. Accordingly, each middle block 22 between the inner main groove 31 and the outer main groove 32 easily deforms moderately, and thus clogging of the inner main groove 31 and the outer main groove 32 with snow is inhibited during running on snow.

Although the pneumatic tire according to the embodiment of the present invention has been described in detail above, the present invention is not limited to the above specific embodiments, and various modifications can be made to implement the present invention as defined in the appended claims.

### EXAMPLES

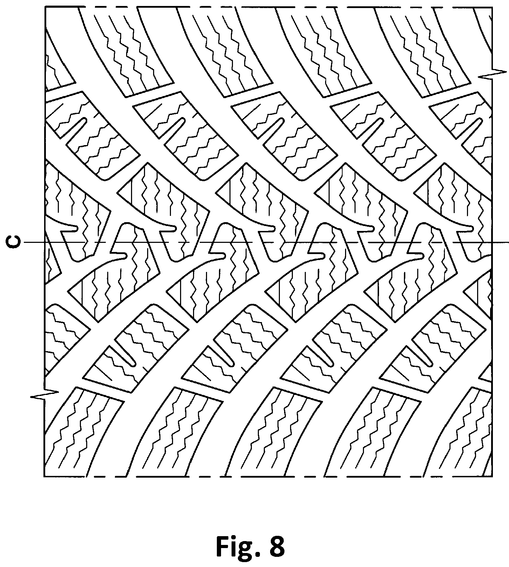

Pneumatic tires with a size of 255/SSR18 having the basic tread pattern in FIG. 1 were produced as samples on the basis of specifications in Table 1. Tires having no main groove extending continuously in the tire circumferential direction as shown in FIG. 8 were produced as samples of a comparative example. Each test tire was tested for steering stability on a dry road surface, wet performance, and performance on snow. The common specifications and the test methods for each test tire are as follows.
Test vehicle: a four-wheel-drive vehicle having a displacement of 3600 cc
Test tire mounted position: all wheels
Rim: 18×8.0
Tire internal pressure: front wheel 230 kPa, rear wheel 250 kPa
Tread ground-contact width: 224 mm
Groove depth of slanted groove: 8.6 mm
Ground-contact width W1/ground-contact length L1: 1.46
Land ratio: 67%
Rubber hardness Ht of tread rubber: 65

### <Steering Stability on Dry Road Surface>

Sensory evaluation was made by a driver for steering stability when the driver drove the above test vehicle on a circuit track having a dry road surface. The results are scores obtained on the basis of the result of the comparative example being 100. A higher value indicates that the steering stability on the dry road surface is better.

### <Wet Performance>

Using an inside drum tester, the speed of occurrence of a hydroplaning phenomenon was measured when each test tire ran on a drum surface at a water depth of 5.0 mm under the following conditions. The results are indexes obtained on the basis of the result of the comparative example being 100. A higher value indicates that the speed of occurrence is higher and the wet performance is better.
Slip angle: 1.0°
Vertical load: 4.2 kN

### <Performance on Snow>

Sensory evaluation was made by a driver for running performance when the driver drove the above test vehicle on a snowy road surface. The results are scores obtained on the basis of the result of the comparative example being 100. A higher value indicates that the performance on snow is better.

The test results are shown in Table 1.

**[Table 1]**

| | Comparative Example 1 | Example 1 | Example 2 | Example 3 | Example 4 | Example 5 |
|---|---|---|---|---|---|---|
| Figure showing tread pattern | FIG. 8 | FIG. 1 | FIG. 1 | FIG. 1 | FIG. 6 | FIG. 7 |
| Distance L3 from tire equator to main groove/tread width TW | - | 0.15 | 0.10 | 0.20 | 0.30 | L3a: 0.15 |
| | | | | | | L3b: 0.30 |
| Groove width W3 of main groove/tread width TW (%) | - | 3.0 | 3.0 | 3.0 | 3.0 | 3.0 |
| Intersection angle θ2 between main groove and slanted groove | - | 40 | 40 | 40 | 45 | θ2a: 40 |
| | | | | | | θ2b: 45 |
| Steering stability on dry road surface (score) | 100 | 102 | 100 | 102 | 104 | 96 |
| Wet performance (index) | 100 | 107 | 108 | 105 | 103 | 112 |
| Performance on snow (score) | 100 | 101 | 100 | 102 | 101 | 105 |

As a result of the tests, it was confirmed that the pneumatic tires of the examples inhibit a hydroplaning phenomenon while maintaining the steering stability on a dry road surface and the performance on snow.

## Claims

1. A pneumatic tire (1) having a tread portion (2), wherein
in the tread portion (2), a main groove (11) is provided so as to extend continuously in a tire circumferential direction between a tire equator (C) and a first tread edge (Tel) at one side in a tire axial direction, a plurality of slanted grooves (10) are each provided so as to extend obliquely from the first tread edge (Tel) toward the tire equator (C) side and terminate at a position at the tire equator (C) side beyond the main groove (11), and a plurality of slanted land portions (13) are each provided so as to be demarcated between the slanted grooves (10) adjacent to each other in the tire circumferential direction, and
in at least one of the slanted land portions (13), a lug groove (15) that is connected at one end thereof to an adjacent slanted groove (10) at a forward side of the slanted groove (10) in a rotation direction (R) and that terminates at another end thereof within the slanted land portion (13) is provided so as to be adjacent to the main groove (11),
**characterized in that** each main groove (11) is configured such that a plurality of groove portions (11a) each connecting the slanted grooves (10) adjacent to each other in the tire circumferential direction are aligned in the tire circumferential direction, whereby the adjacent groove portions (11a) are continuous,
and wherein the main groove (11) has a smaller groove depth in the groove portion (11a) than the slanted groove (10).

2. The pneumatic tire (1) according to claim 1, wherein the lug groove (15) is provided at the first tread edge (Tel) side of the main groove (11).

3. The pneumatic tire (1) according to claim 1 or 2, wherein the lug groove (15) is slanted in a direction away from the main groove (11) while extending from the one end toward the other end thereof.

4. The pneumatic tire (1) according to any one of claims 1 to 3, wherein each slanted groove (10) has a larger groove width than the main groove (11).

5. The pneumatic tire (1) according to any one of claims 1 to 4, wherein a distance (L3) in the tire axial direction from the tire equator (C) to a groove center line of the main groove (11) is 0.10 to 0.20 times of a tread width (TW).

6. The pneumatic tire (1) according to any one of claims 1 to 5, wherein a ratio W1/L1 of a maximum ground-contact width W1 in the tire axial direction to a ground-contact length L1 in the tire circumferential direction on the tire equator (C) in a ground-contact surface of the tread portion (2) when the pneumatic tire (1) is mounted on a normal rim with a normal internal pressure and a normal load is applied to the pneumatic tire (1) such that the tread portion (2) is brought into contact with a plane at a camber angle of 0°, is 1.10 to 1.80.

7. The pneumatic tire (1) according to claim 6, wherein the maximum ground-contact width W1 is 200 to 250 mm.

8. The pneumatic tire (1) according to any one of claims 1 to7, wherein in the tread portion (2) central axial grooves (12) are provided, wherein each central axial groove (12) branches from the slanted groove (10) and extends in the tire axial direction so as to traverse the tire equator (C).

9. The pneumatic tire (1) according to any one of claims 1 to8, wherein in each slanted land portion (13), a connection groove (18) is further provided so as to connect between the slanted grooves (10) adjacent to each other in the tire circumferential direction.

## Patentansprüche

1. Luftreifen (1) mit einem Laufflächenabschnitt (2), wobei
in dem Laufflächenabschnitt (2) eine Hauptrille (11) so vorgesehen ist, dass sie sich kontinuierlich in einer Reifenumfangsrichtung zwischen einem Reifenäquator (C) und einer ersten Laufflächenkante (Tel) auf einer Seite in einer axialen Richtung des Reifens erstreckt, eine Vielzahl von geneigten Rillen (10) jeweils so vorgesehen sind, dass sie sich schräg von der ersten Laufflächenkante (Tel) zur Seite des Reifenäquators (C) hin erstrecken und an einer Stelle auf der Seite des Reifenäquators (C) jenseits der Hauptrille (11) enden,
und eine Vielzahl von geneigten Landabschnitten (13) jeweils so vorgesehen ist, dass sie zwischen den in der Reifenumfangsrichtung benachbarten geneigten Rillen (10) abgegrenzt sind, und
in wenigstens einem der geneigten Landabschnitte (13) eine Stollenrille (15) vorgesehen ist, die an ihrem einen Ende mit einer benachbarten geneigten Rille (10) an einer Vorderseite der geneigten Rille (10) in einer Drehrichtung (R) verbunden ist und die an ihrem anderen Ende innerhalb des geneigten Landabschnitts (13) endet, so dass sie zu der Hauptrille (11) benachbart ist,
**dadurch gekennzeichnet, dass** jede Hauptrille (11) so konfiguriert ist, dass eine Vielzahl von Rillenabschnitten (11a), die jeweils die geneigten Rillen (10) verbinden, die in der Reifenumfangsrichtung benachbart sind, in der Umfangsrichtung des Reifens ausgerichtet sind, wodurch die benachbarten Rillenabschnitte (11a) durchgehend sind,
und wobei die Hauptrille (11) in dem Rillenabschnitt (11a) eine geringere Rillentiefe als die geneigte Rille (10) aufweist.

2. Luftreifen (1) nach Anspruch 1, wobei die Stollenrille (15) auf der Seite der ersten Laufflächenkante (Tel) der Hauptrille (11) vorgesehen ist.

3. Luftreifen (1) nach Anspruch 1 oder 2, wobei die Stollenrille (15) in einer Richtung von der Hauptrille (11) weg geneigt ist, während sie sich von dem einen Ende zu dem anderen Ende davon erstreckt.

4. Luftreifen (1) nach einem der Ansprüche 1 bis 3, wobei jede geneigte Rille (10) eine größere Rillenbreite als die Hauptrille (11) aufweist.

5. Luftreifen (1) nach einem der Ansprüche 1 bis 4, wobei ein Abstand (L3) in der axialen Richtung des Reifens von dem Reifenäquator (C) zu einer Rillenmittellinie der Hauptrille (11) das 0,10- bis 0,20-fache einer Laufflächenbreite (TW) beträgt.

6. Luftreifen (1) nach einem der Ansprüche 1 bis 5, wobei ein Verhältnis W1/L1 einer maximalen Bodenkontaktbreite W1 in der axialen Richtung des Reifens zu einer Bodenkontaktlänge L1 in der Umfangsrichtung des Reifens auf dem Reifenäquator (C) in einer Bodenkontaktfläche des Laufflächenabschnitts (2), wenn der Luftreifen (1) auf eine normale Felge mit einem normalen Innendruck aufgezogen ist und eine normale Last auf den Luftreifen (1) aufgebracht ist, so dass der Laufflächenabschnitt (2) mit einer Ebene unter einem Sturzwinkel von 0° in Kontakt gebracht wird, 1,10 bis 1,80 beträgt.

7. Luftreifen (1) nach Anspruch 6, wobei die maximale Bodenkontaktbreite W1 200 bis 250 mm beträgt.

8. Luftreifen (1) nach einem der Ansprüche 1 bis 7, wobei in dem Laufflächenabschnitt (2) zentrale axiale Rillen (12) vorgesehen sind, wobei jede zentrale axiale Rille (12) von der geneigten Rille (10) abzweigt und sich in der axialen Richtung des Reifens erstreckt, so dass sie den Reifenäquator (C) überquert.

9. Luftreifen (1) nach einem der Ansprüche 1 bis 8, wobei in jedem geneigten Landabschnitt (13) ferner eine Verbindungsrille (18) vorgesehen ist, um eine Verbindung zwischen den in der Reifenumfangsrichtung benachbarten geneigten Rillen (10) herzustellen.

## Revendications

1. Bandage pneumatique (1) ayant une portion formant bande de roulement (2), dans lequel
dans la portion formant bande de roulement (2), une rainure principale (11) est prévue de manière à s'étendre en continu dans une direction circonférentielle du pneumatique entre un équateur de pneumatique (C) et un premier bord de roulement (Tel) sur un côté dans une direction axiale du pneumatique, une pluralité de rainures obliques (10) sont prévues chacune de manière à s'étendre en oblique depuis le premier bord de roulement (Tel) vers le côté de l'équateur de pneumatique (C) et à se terminer à une position au niveau du côté de l'équateur de pneumatique (C) au-delà de la rainure principale (11), et une pluralité de portions en relief obliques (13) sont prévues chacune de manière à être démarquées entre les rainures obliques (10) adjacentes l'une à l'autre dans la direction circonférentielle du pneumatique, et
dans l'une au moins des portions en relief obliquées (13), une rainure annexe (15) qui est connectée à l'une de ses extrémités à une rainure oblique adjacente (10) au niveau d'un côté avant de la rainure oblique (10) dans une direction de rotation (R), et qui se termine à son autre extrémité à l'intérieur de la portion en relief oblique (13) est prévue de manière à être adjacente à la rainure principale (11),
**caractérisé en ce que** chaque rainure principale (11) est configurée de telle façon qu'une pluralité de portions de rainure (11a), chacune connectant les rainures obliques (10) adjacentes l'une à l'autre dans la direction circonférentielle du pneumatique, sont alignées dans la direction circonférentielle du pneumatique, et de sorte que les portions de rainures adjacentes (11a) sont continues,
et dans lequel la rainure principale (11) a une profondeur de rainure plus faible dans la portion de rainure (11a) que la rainure oblique (10).

2. Bandage pneumatique (1) selon la revendication 1, dans lequel la rainure annexe (15) est prévue au niveau du côté du premier bord de roulement (Te1) de la rainure principale (11).

3. Bandage pneumatique (1) selon la revendication 1 ou 2, dans lequel la rainure annexe (15) est en oblique dans une direction en éloignement de la rainure principale (11) tout en s'étendant depuis l'une de ses extrémités vers l'autre extrémité.

4. Bandage pneumatique (1) selon l'une quelconque des revendications 1 à 3, dans lequel chaque rainure oblique (10) a une largeur de rainure plus grande que la rainure principale (11).

5. Bandage pneumatique (1) selon l'une quelconque des revendications 1 à 4, dans lequel une distance (L3) dans la direction axiale du pneumatique depuis l'équateur de pneumatique (C) jusqu'à une ligne centrale de la rainure principale (11) est de 0,10 à 0,20 fois une largeur de roulement (TW).

6. Bandage pneumatique (2) selon l'une quelconque des revendications 1 à 5, dans lequel un rapport W1/L1 d'une largeur maximum de contact au sol W1 dans la direction axiale du pneumatique sur une longueur de contact au sol L1 dans la direction circonférentielle du pneumatique sur l'équateur de pneumatique (C) dans une surface de contact au sol de la portion formant bande de roulement (2) quand le bandage pneumatique (1) est monté sur une jante normale avec une pression interne normale et qu'une charge normale est appliquée au bandage pneumatique (1) de telle façon que la portion formant bande de roulement (2) est amenée en contact avec un plan sous un angle de cambrage de 0°, est de 1,10 à 1,80.

7. Bandage pneumatique (1) selon la revendication 16, dans lequel la largeur maximum de contact au sol W1 est de 200 à 250 mm.

8. Bandage pneumatique (1) selon l'une quelconque des revendications 1 à 7, dans lequel des rainures axiales centrales (12) sont prévues dans la portion formant bande de roulement (2), dans lequel chaque rainure axiale centrale (12) est ramifiée depuis la rainure oblique (10) et s'étend dans la direction axiale du pneumatique de manière à traverser l'équateur de pneumatique (C).

9. Bandage pneumatique (1) selon l'une quelconque des revendications 1 à 8, dans lequel, dans chaque portion en relief oblique (13), il est en outre prévu une rainure de connexion (18) de manière à être connectée entre les rainures obliques (10) adjacentes l'une à l'autre dans la direction circonférentielle du pneumatique.
